**Europäisches Patentamt**

**European Patent Office**

**Office européen des brevets**

(19)

(11) Publication number : **0 317 029 B1**

(12) # EUROPEAN PATENT SPECIFICATION

(45) Date of publication of patent specification :
**19.02.92 Bulletin 92/08**

(51) Int. Cl.⁵ : **B60P 3/34, E04H 15/06**

(21) Application number : **88202580.2**

(22) Date of filing : **17.11.88**

(54) Extension for a folding caravan, and a folding caravan provided with an extension.

(30) Priority : **18.11.87 NL 8702751**

(43) Date of publication of application :
**24.05.89 Bulletin 89/21**

(45) Publication of the grant of the patent :
**19.02.92 Bulletin 92/08**

(84) Designated Contracting States :
**DE FR GB NL**

(56) References cited :
EP-A- 0 030 398
DE-A- 1 434 591
DE-A- 2 162 124
FR-A- 1 558 455
NL-A- 7 002 116
US-A- 3 333 594

(73) Proprietor : **HOLTKAMP VOUWCARAVANS B.V.**
**Hoofdstraat 50**
**NL-9561 JC Ter Apel (NL)**

(72) Inventor : **Holtkamp, Egbert Berend**
**Hoofdkade 92a**
**NL-9561 JK Ter Apel (NL)**

(74) Representative : **Smulders, Theodorus A.H.J., Ir. et al**
**Vereenigde Octrooibureaux Nieuwe Parklaan 107**
**NL-2587 BP 's-Gravenhage (NL)**

EP 0 317 029 B1

## Description

This invention relates to a folding caravan comprising a deployable frame which, in the service condition, defines a plurality of side walls, and an extension with an extension frame composed of tent poles or the like, and a tent cloth supported in the service condition by the extension frame.

Extensions for caravans are known per se in various embodiments. An extension or extension tent consists of a frame of tent poles and a frame-supported tent cloth. In the service condition, the tent cloth is connected in watertight fashion to the caravan and the frame can also be connected to the caravan. As used herein, an extension means a structure which unlike a canopy, is destined for use under all weather conditions in which the caravan itself is used, and the extension construction should be solid and suitable for permanent use under all weather conditions.

Moreover, it is important that the extension can be erected quickly and in a simple manner.

A folding caravan provided with an extension of the type described above is known from FR-A-1558455. This known folding caravan has a deployable frame which, when deployed, comprises three inverted U-shaped bows. To one end of the horizontal section of each bow one end of a horizontal tube may be connected. The other end of the horizontal tubes is connected to a pole. Thus an extension of three horizontal tubes and three poles is obtained over which a tent cloth can be arranged. The combination of a horizontal tube and a pole is not stable in itself and also each such combination needs a separate point of connection to the deployable frame.

It is an object of the present invention to provide an improved folding caravan provided with an extension, which is simple yet reliable and stable under all weather conditions.

A folding caravan of the above described type is characterized according to the present invention in that at least one of the side walls is provided with two points of attachment, to each of which is attached a V-shaped carrier construction of an extension, each V-shaped carrier construction comprising two arms attached at an angle to one another at one end and attached at the same end to a point of attachment, each of said arms being attached near the other end to the upper end of an associated upright, each V-shaped construction having an inner arm proximal to the other V-shaped construction, said inner arm being substantially parallel to the inner arm of the other V-shaped construction, and said inner arms extending substantially transversely to the side wall of the folding caravan.

It is observed that European patent application 0 030 398 (Brutsaert) discloses a canopy comprising a plurality of arms pivotally connected to a caravan, which arms, in the service condition, form a V-shaped construction. By using uprights to be connected to the ends of the arms, the canopy can be expanded to form an extension tent. This known extension tent, however, comprises an elongate box affixed against the caravan, in which box the arms lie alongside each other, and from which location the arms can be swivelled outwardly. One of the arms has then to be swivelled through 180° and be attached again against the wall of the caravan. Such a construction is not suitable for use in a folding caravan.

Some embodiments of the present invention will now be described, by way of example, with reference to the accompanying drawings, in which:

Fig. 1 is a diagrammatic view of an example of a folding caravan wherein the present invention can be applied;

Fig. 2 is a diagrammatic top view of the folding caravan of fig. 1 provided with an extension according to the present invention;

Fig. 3 is a diagrammatic, perspective side view of the folding caravan of fig. 2;

Fig. 4 is a diagrammatic, perspective rear view of another type of folding caravan provided with an extension according to the present invention;

Fig. 5 is a diagrammatic top view of the folding caravan of Fig. 4; and

Fig. 6 diagrammatically shows a method of folding an extension according to the present invention with the frame of a folding caravan.

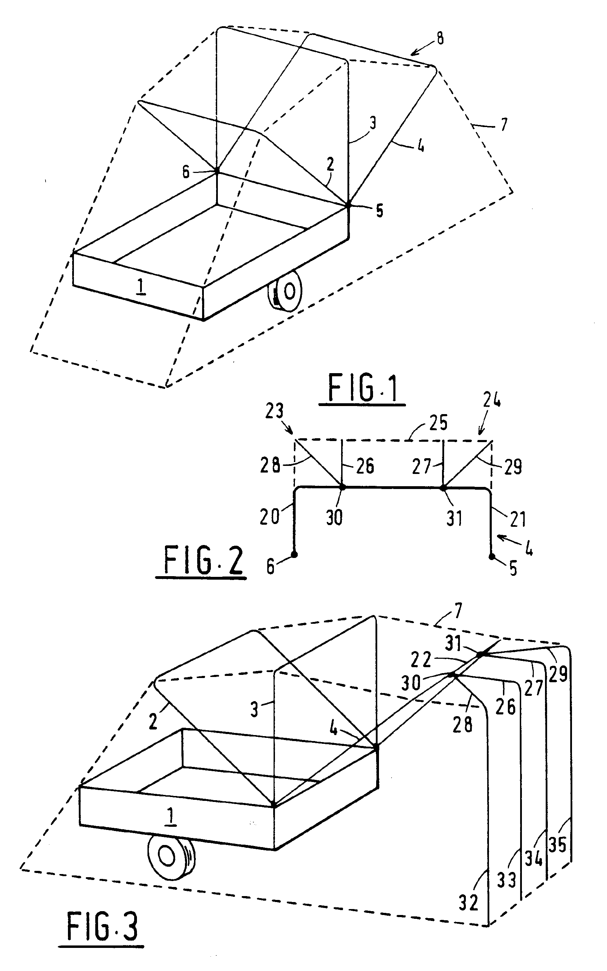

Fig. 1 is a diagrammatic, perspective view of an example of a folding caravan which can be provided with an extension according to the present invention. The folding caravan shown comprises a vehicle 1 to be trailered behind an automobile, said vehicle being provided with plurality of U-shaped bows 2,3,4 pivoted at the ends of the legs to vehicle 1. The U-shaped bows, in this example, have common pivot points 5,6 and are shown in the service condition. The U-shaped bows support a tent cloth 7 indicated in broken lines. Bows 2,3,4 are collapsible with the tent cloth into vehicle 1.

The effective space within the deployed folding caravan can be enlarged by using a suitable extension. In principle, an extension can be placed against any of the four tent sides of the deployed folding caravan. However, in a vehicle of the type shown, the largest free passage between the space enclosed by tent cloth 7 an an extension is obtained when the extension is placed against the end 8 remote from vehicle 1.

Fig. 2 is a diagrammatic top view showing the manner in which according to the present invention the end 8 of the folding caravan can be provided with an extension. For the sake of clearness, Fig. 2 only shows the U-shaped bow 4 of the folding caravan.

Attached to the horizontal portion 22 extending between the legs 20,21 of the U-shaped bow 4, equally interspaced from legs 20,21, are extension carrier constructions 23,24 which, in service, carry a tent cloth 25 shown in broken lines.

In top view, each carrier construction is substantially V-shaped, as shown in Fig. 2, and comprises a first arm 26,27, extending substantially transversely to the portion 22. Furthermore, each carrier construction includes an inclined arm 28,29 extending obliquely outwardly with arm 26,27 from the point of attachment 30,31 of portion , 22. The inclined arms 28,29 can extend advantageously, as shown, according to a diagonal of an imaginary rectangle whose arm 26,27 and the section of portion 22 situated between point of attachment 30,31 and leg 20,21, form two legs. The inclined arms 28,29, however, can also be shorter, if desired, than the diagonal of the above imaginary rectangle, or lie at a different angle to portion 22.

The arms 26,27, if desired, may also make a different angle with portion 22, but these arms, as viewed from portion 22, should preferably not converge or only slightly so, so as to prevent so-called water pockets from being formed in the tent cloth between arms 26,27 in the event of rainy weather. With the same purpose, arms 26-29 may slightly slope downwards from the frame of the folding caravan.

As shown in Fig. 3, each of the extension carrier constructions 22,24 comprises an upright 32,33,34,35 extending substantially vertically downwards from the free end of each arm.

The extension carrier constructions can in principle be composed of conventional loose tent poles, which are attached to each other through suitable coupling pieces, such as sleeves and corner pieces, and which furthermore can be attached to the frame of the folding caravan in any one of the manners known for the purpose.

However, in order that the property of a quick erection without loose parts, which is the general aim in the design of a folding caravan, should not be lost upon application of an extension, the extension carrier construction is preferably so designed that it is connected permanently but foldably to the frame of a folding caravan.

The arms 26,28, and 27,29, respectively, of each V-shaped carrier construction may, to that end, be pivoted to each other, e.g. near the point of attachment 30,31 of frame portion 22, so that the arms can be collapsed against each other. The assembly may then again be pivoted to frame portion 22, so that the collapsed arms can be brought jointly into a position alongside the frame portion. Possibly, one of the arms or both arms of an assembly may, moreover, be telescopic, if the ends of the arms rotated along the frame portion should extend beyond legs 20,21 (upon outward rotation) or should butt against each other (upon inward rotation).

The uprights can then be pivoted to the respective arms and furthermore be telescopic or collapsible.

Thus, upon folding of the extension, each upright can first be adjusted in length to the associated arm and subsequently be folded alongside the associated arm. Thereafter, the arms of each V-shaped construction are collapsed and folded alongside a frame portion.

The cloth of the extension may be connected to the cloth of the folding caravan in any manner known for the purpose, e.g. through a zip-fastener. Preferably, the cloth of the extension, however, is integral with the cloth of the folding caravan.

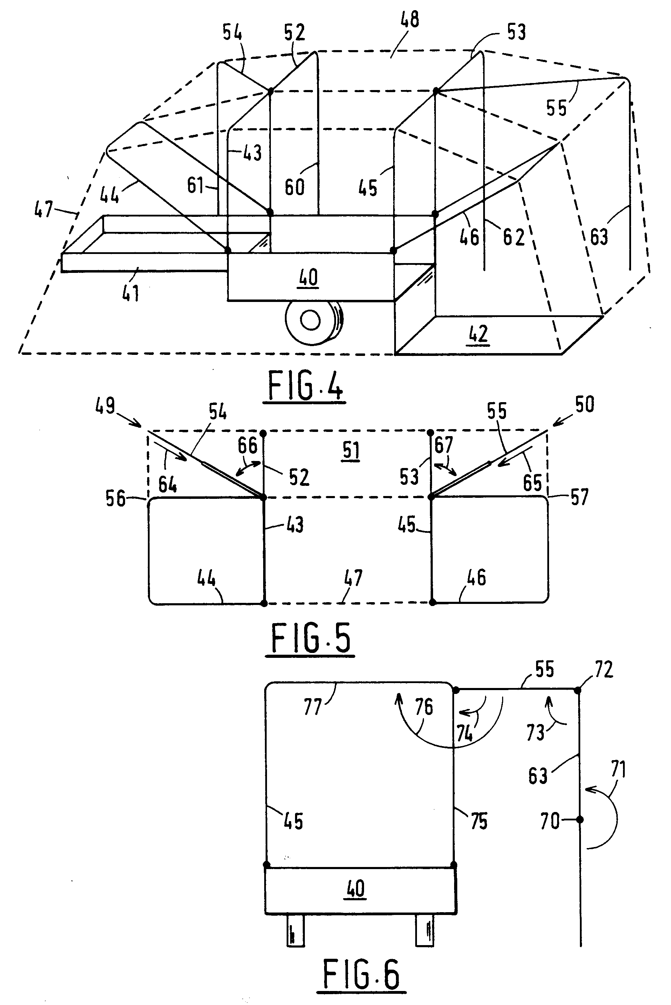

Fig. 4 shows another example of a folding caravan provided with an extension according to the present invention.

The folding caravan shown in Fig. 4 is of the type having a carriage body 40, a cover 41 of the body adapted to be folded out to one side and a bottom plate 42 adapted to be folded out to the opposite side. Besides, adjacent the pivot between carriage body and cover, there are pivotally mounted two inverted-U-shaped bows 43,44. Near the opposite carriage edge, there are pivotally mounted two inverted-U-shaped bows 45,46.

The U-shaped bows 43 and 45, in the service condition, are upright or approximately upright, while the U-shaped bows 44 and 46, in side view, extend obliquely upwards and outwards. The tent cloth spread over the bows is indicated by broken contour lines 47.

In the example shown, an extension 48 is provided at the one long side of the folded-out-caravan. To that end, use is again made of two assemblies 49,50 (see Fig. 5) substantially V-shaped in top elevational view, which carry the cloth 51 of the extension diagrammatically indicated by broken lines.

Each V-shaped assembly 49,50 is attached to or adjacent the top end of one of the legs of an upright U-shaped bow 43,45, and furthermore is composed of horizontal or slightly downwardly sloping arms and upright, similarly to the V-shaped assemblies shown in Figs 2 and 3. Each V-shaped assembly 49,50 has a first arm 52,53, extending substantially transversely to the side face of the folding caravan defined by the legs of the U-shaped bows situated on that side of the frame. Moreover, each V-shaped assembly has again an outwardly extending, inclined arm 54,55, extending advantageously along a diagonal of the imaginary rectangle, formed by the first arm 52,53 and the connecting line between the fixed end of the first arm and the outer angular point 56,57 of the adjoining inclined bow 44, 46.

Each arm has again an upright 60,61,62,63 (Fig. 4) at its free end. One or more uprights and arms may, if desired, be again telescopic or collapsible, while the arms of each V-shaped assembly are preferably pivotally attached again to each other and/or to the frame bows 43,45 in such a manner that the arms can be brought into a position alongside each other.

The attachment of the U-shaped assemblies to the frame bows may be such that the collapsed V-shaped assemblies can be rotated into a position alongside a leg of a frame bow, or into a position alongside the horizontal portion of a frame bow.

Fig. 6, together with Fig. 5, illustrates diagrammatically one of the possibilities for an extension carrier construction fixedly attached to the frame of a folding caravan to be made of the collapsible type in accordance with the present invention.

In example shown, the inclined arms 54,55 are each telescopic so that said arms can be retracted according to arrows 64,65 (Fig. 5).

It is also possible to rotate arms 52,54, and 53,55, respectively, towards each other, as indicated by arrows 66,67 in Fig. 5.

Fig. 6 diagrammatically shows, by way of example, the carriage body 40 with bow 45 and the V-shaped assembly 50 in side view, so that only one of the arms 55 and one upright 63 are visible. Each upright can be collapsed through a pivot 70, as shown, by way of example, by an arrow 71. Naturally, the uprights can also be telescopic.

A collapsed upright is subsequently folded along the associated arm, which may have been shortened previously, e.g. by telescoping or collapsing action, which is possible by pivot 72 between arm and upright, see arrow 73. The resulting collapsed assembly of tent poles, tubes or bars can be folded according to arrow 74 along the vertical leg 75 of bow 45. Alternatively, the collapsed assembly can be folded according to arrow 76 along the horizontal portion 77 of bow 45.

It is likewise possible to fold one of the arms with associated upright of each V-shaped assembly along the vertical leg of the frame bow, while the other arm with associated upright could then be folded along the horizontal portion of the bow.

The cloth of the extension may then advantageously be integral again with the tent cloth of the folding caravan.

It will be clear from the foregoing that the extension construction according to the present invention enables to realize a stable and relatively large extension with a light and relatively simple carrier construction. To that end, only one point of attachment is necessary for each V-shaped assembly on that side of the caravan where the extension is to be placed. The points of attachment may be provided on different frame portions.

Since the V-shaped assemblies can be made collapsible in a simple manner, the extension construction according to the present invention is particularly suitable for use in folding caravans, wherein the extension can be constructed advantageously as a permanent extension without loose parts, which together with the folding caravan is adapted to be folded in and out.

Each V-shaped assembly has three supporting points and is hence stable but on the other hand, due to the lack of cross connections, is sufficiently flexible to slightly yield in the event of a rough wind, so that the risk of the extension being blown to pieces by the wind is prevented.

Furthermore, the construction is such that the arms form no barrier against the flow-away of rain. The formation of so-called water pockets is prevented, consequently.

## Claims

1. A folding caravan comprising a deployable frame which, in the service condition, defines a plurality of side walls, and an extension with an extension frame composed of tent poles or the like, and a tent cloth supported in the service condition by the extension frame, characterized in that at least one of the side walls is provided with two points of attachment, to each of which is attached a V-shaped carrier construction of an extension, each V-shaped carrier construction comprising two arms interconnected at an angle at one end and attached at the same end to a point of attachment, each of said arms being attached near the other ends to the upper end of an associated upright, each V-shaped construction having an inner arm proximal to the other V-shaped construction, said inner arm being substantially parallel to the inner arm of the other V-shaped construction, and said inner arms extending substantially transversely to the side wall of the folding caravan.

2. A folding caravan as claimed in claim 1, characterized in that at least one upright is provided with a pivot and is collapsible.

3. A folding caravan as claimed in claim 1, characterized in that at least one upright is telescopic.

4. A folding caravan as claimed in any one of claims 1, 2 or 3, characterized in that at least one of the arms is provided with a pivot and is collapsible.

5. A folding caravan as claimed in any one of claims 1-3, characterized in that at least one of the arms is telescopic.

6. A folding caravan as claimed in any one of claims 1-5, characterized in that each upright is connected to the associated arm through a pivot.

7. A folding caravan as claimed in any one of claims 1-6, characterized in that the arms of each V-shaped carrier construction are pivotally interconnected and can be brought into a position alongside each other.

8. A folding caravan as claimed in claim 1, characterized in that each V-shaped carrier construction is collapsible and that the point of attachment includes at least one pivot enabling to bring at least a portion of a folded V-shaped carrier construction in a position alongside a frame portion of the deployable frame of the folding caravan.

9. A folding caravan as claimed in any one of claims 1-8, characterized by two spaced apart points of attachment provided on a frame portion which is horizontal in the service condition, wherein to each point of attachment a V-shaped carrier construction for an extension is attached, with one arm of each V-shaped carrier construction extending substantially transversely to the horizontal frame portion, the other arms of the two V-shaped carrier constructions extending obliquely outwardly.

10. A folding caravan as claimed in claims 8 and 9, characterized in that the folded V-shaped carrier constructions can be brought into a position alongside the orizontal frame portion.

11. A folding caravan as claimed in any one of claims 1-8, characterized by at least two upright frame portions spaced apart in the service condition, each carrying a point of attachment for a V-shaped carrier construction of an extension, one arm of each V-shaped carrier construction extending substantially transversely to the wall defined by the two upright frame portions, the other arms of the two V-shaped carrier constructions extending obliquely outwardly.

12. A folding caravan as claimed in claims 8 and 11, characterized in that the folded V-shaped carrier constructions can be brought at least partly into a position alongside the associated upright frame portion.

13. A folding caravan as claimed in claim 12, characterized in that each upright frame portion is a leg of an inverted-U-shaped bow having a horizontal portion contiguous with the upright frame portion, and that the folded V-shaped carrier constructions can be folded at least partly into a position alongside the horizontal portion of the associated bow.

14. A folding caravan as claimed in any one of claims 1-13, characterized in that the cloth of the extension is integral with the cloth of the folding caravan.

15. An extension for a folding caravan as claimed in any one of claims 1-14.

**Patentansprüche**

1. Faltbarer Wohnwagen mit einem entfaltbaren Rahmen, der im Betriebszustand mehrere Seitenwände bildet, mit einer Erweiterung mit einem aus Zeltstangen oder dergleichen zusammengesetzten Erweiterungsrahmen und mit einer Zeltplane, die im Betriebszustand von dem Erweiterungsrahmen unterstützt ist, dadurch gekennzeichnet, daß mindestens eine der Seitenwände mit zwei Anbringungspunkten versehen ist, an deren jedem eine V-förmige Trägerkonstruktion einer Erweiterung angebracht ist, die jeweils an einem Ende unter einem Winkel miteinander verbundene und an dem gleichen Ende an einem Anbringungspunkt angebrachte Arme umfaßt, von denen jeder nahe dem anderen Ende mit dem oberen Ende einer zugeordneten aufrechten Stange verbunden ist, wobei jede V-förmige Konstruktion einen der anderen V-förmigen Konstruktion benachbarten inneren Arm aufweist, der parallel zu dem inneren Arm der anderen V-förmigen Konstruktion ist und wobei die inneren Arme sich im wesentlichen quer zu der Seitenwand des faltbaren Wohnwagens erstrecken.

2. Faltbarer Wohnwagen nach Anspruch 1, dadurch gekennzeichnet, daß mindestens eine aufrechte Stange mit einem Gelenk versehen und zusammenlegbar ist.

3. Faltbarer Wohnwagen nach Anspruch 1, dadurch gekennzeichnet, daß mindestens eine aufrechte Stange teleskopisch ist.

4. Faltbarer Wohnwagen nach einem der Ansprüche 1, 2 oder 3, dadurch gekennzeichnet, daß mindestens einer der Arme mit einem Gelenk versehen und zusammenlegbar ist.

5. Faltbarer Wohnwagen nach einem der Ansprüche 1 bis 3, dadurch gekennzeichnet, daß mindestens einer der Arme teleskopisch ist.

6. Faltbarer Wohnwagen nach einem der Ansprüche 1 bis 5, dadurch gekennzeichnet, daß jede aufrechte Stange mit dem zugeordneten Arm mittels eines Gelenks verbunden ist.

7. Faltbarer Wohnwagen nach einem der Ansprüche 1 bis 6, dadurch gekennzeichnet, daß die Arme jeder V-förmigen Trägerkonstruktion schwenkbar miteinander verbunden und in eine Position längs nebeneinander bringbar sind.

8. Faltbarer Wohnwagen nach Anspruch 1, dadurch gekennzeichnet, daß jede V-förmige Trägerkonstruktion zusammenlegbar ist und mindestens ein Gelenk umfaßt, welches bewirkt, daß mindestens ein Teil der zusammengefalteten V-förmigen Trägerkonstruktion in eine Position längs neben einem Rahmenteil des entfaltbaren Rahmens des faltbaren Wohnwagens bringbar ist.

9. Faltbarer Wohnwagen nach einem der Ansprüche 1 bis 8, gekennzeichnet durch zwei Abstand voneinander aufweisende Anbringungspunkte an einem im Betriebszustand, in welchem an jedem Anbringungspunkt eine V-förmige Trägerkonstruktion für eine Erweiterung angebracht ist, horizontalen Rahmenteil, wobei sich ein Arm jeder V-förmigen Trägerkonstruktion im wesentlichen quer zu dem horizontalen Rahmenteil und der jeweils andere Arm der beiden V-förmigen Trägerkonstruktionen schräg nach außen erstrecken.

10. Faltbarer Wohnwagen nach den Ansprüchen 8 und 9, dadurch gekennzeichnet, daß die zusammengefalteten V-förmigen Trägerkonstruktionen in eine Position längs neben dem horizontalen Rahmenteil bringbar sind.

11. Faltbarer Wohnwagen nach einem der Ansprüche 1 bis 8, gekennzeichnet durch mindestens zwei aufrechte, im Betriebszustand Abstand voneinander aufweisende Rahmenteile, von denen jeder einen Anbringungspunkt für eine V-förmige Trägerkonstruktion einer Erweiterung trägt, wobei ein Arm jeder V-förmigen Trägerkonstruktion sich im wesentlichen quer zu der durch die beiden aufrechten Rahmenteile gebildeten Wandung und die jeweils anderen Arme der beiden V-förmigen Trägerkonstruktionen sich schräg nach außen erstrecken.

12. Faltbarer Wohnwagen nach den Ansprüchen 8 und 11, dadurch gekennzeichnet, daß die zusammengefalteten V-förmigen Trägerkonstruktionen mindestens teilweise in eine Position längs neben dem zugeordneten aufrechten Rahmenteil bringbar sind.

13. Faltbarer Wohnwagen nach Anspruch 12, dadurch gekennzeichnet, daß jeder aufrechte Rahmenteil ein Schenkel eins umgekehrt U-förmigen Bügels mit einem horizontalen, an den aufrechten Rahmenteil angrenzenden Teil ist und daß die zusammengefalteten V-förmigen Trägerkonstruktionen zumindest teilweise in eine Position längs neben dem horizontalen Teil des zugeordneten Bügels faltbar sind.

14. Faltbarer Wohnwagen nach einem der Ansprüche 1 bis 13, dadurch gekennzeichnet, daß die Zeltplane der Erweiterung einstückig mit der Zeltplane des faltbaren Wohnwagens ist.

15. Eine Erweiterung für einen faltbaren Wohnwagen nach den Ansprüchen 1 bis 14.

**Revendications**

1. Caravane pliante comprenant un châssis déployable qui, en position d'utilisation, délimite une pluralité de parois latérales, et une extension comportant un cadre d'extension composé de piquets de tente ou analogues, et d'une toile de tente supportée en position d'utilisation par le cadre d'extension, caractérisée en ce qu'au moins une des parois latérales est munie de deux points de fixation, à chacun desquels est fixe une structure porteuse de l'extension en forme de V, chacune comprenant deux bras reliés l'un à l'autre à un angle à l'une des extrémités, et est attaché à la même extrémité en un point de fixation, chacun de ces bras étant attachés au voisinage de l'autre extrémité à la partie supérieure d'un montant, chaque autre structure porteuse en forme de V possédant un bras, le plus proche de l'autre structure en V, ce bras intérieur se trouvant pratiquement parallèle au bras intérieur de l'autre structure intérieure en V, et ces bras intérieurs s'étendent de façon pratiquement transversale par rapport à la paroi latérale de la caravane pliante.

2. Caravane pliante telle que revendiquée dans la revendication 1, caractérisée en ce qu'au moins un montant est muni d'une articulation et peut se replier.

3. Caravane pliante telle que revendiquée dans la revendication 1, caractérisée en ce qu'au moins un des montants est télescopique.

4. Caravane pliante telle que revendiquée dans l'une quelconque des revendications 1, 2 ou 3, caractérisée en ce qu'au moins un des bras est muni d'une articulation et peut se replier.

5. Caravane pliante telle que revendiquée dans l'une quelconque des revendications 1 à 3, caractérisée en ce qu'au moins un des bras est télescopique.

6. Caravane pliante telle que revendiquée dans l'une quelconque des revendications 1 à 5, caractérisée en ce chaque montant est relié au bras associé par une articulation.

7. Caravane pliante telle que revendiquée dans l'une quelconque des revendications 1 à 6, caractérisée en ce que les bras de chaque structure porteuse en V sont reliés les uns aux autres de façon à pouvoir pivoter et peuvent être mis en place les uns le long des autres.

8. Caravane pliante telle que revendiquée dans la revendication 1, caractérisée en ce que chaque structure porteuse en V peut se replier et que le point d'attache comporte au moins une articulation capable d'amener au moins une partie de la structure en V dans une position le long d'une partie du cadre déployable de la caravane pliante.

9. Caravane pliante telle que revendiquée dans l'une quelconque des revendications 1 à 8, caractérisée par deux points espacés l'un de l'autre, prévus sur une portion du cadre qui est horizontale en position d'utilisation, où en chaque point d'attache est fixé une structure porteuse en V pour une extension, avec un bras de chaque structure porteuse en V s'étendant de façon pratiquement transversale par rapport à la portion de cadre horizontale, les autres bras de la structure porteuse en V s'étendant obliquement vers l'extérieur.

10. Caravane pliante telle que revendiquée dans les revendications 8 et; 9 caractérisée en ce que les structure porteuses en forme de V repliées peuvent être mise en place le long de la portion horizontale du cadre.

11. Caravane pliante telle que revendiquée dans l'une quelconque des revendications 1 à 8, caracterisée par au moins deux portions de cadre dirigées vers le haut espacées l'une de l'autre en position d'utilisation, chacune portant un point d'attache pour une structure porteuse en forme de V s'étendant de façon pratiquement transversale par rapport à la paroi déterminée par deux portions de cadre dirigées vers le haut, les autres bras des structures porteuses en forme de V s'étendant obliquement vers l'extérieur.

12. Caravane pliante telle que revendiquée dans les revendications 8 et 11, caractérisée en ce que les structures porteuses en forme de V repliées peuvent se placer au moins partiellement le long de la portion horizontale de l'arceau associé.

13. Caravane pliante telle que revendiquée dans la revendication 12, caractérisée en ce que chaque portion de cadre dirigée vers le haut est une branche d'un arceau en forme de U renversé, présentant une portion horizontale contiguë à la portion de cadre dirigée vers le haut, et les structures porteuses en forme de V repliées peuvent être rabattues au moins partiellement dans une position le long de la portion horizontale de l'arceau associé.

14. Caravane pliante telle que revendiquée dans l'une quelconque des revendications 1 à 13, caractérisée en ce que la toile de l'extension fait partie intégrante de la toile de la caravane pliante.

15. Extension pour une caravane pliante telle que revendiquée dans l'une quel conque des revendications 1 à 14.

FIG·1

FIG·2

FIG·3

FIG.4

FIG.5

FIG.6

9